# EUROPEAN PATENT APPLICATION

(11) **EP 2 133 796 A1**
(43) Date of publication of application: **16.12.2009**
(21) Application number: 08721869.9
(22) Date of filing: 12.03.2008
(51) Int. Cl.: G06F 13/00, H04M 3/42, H04M 3/53

(54) **COMMUNICATION SYSTEM**

(30) Priority: 30.03.2007 JP 2007091479
(71) Applicant: Nec Corporation, Tokyo 108-8001 (JP); Nec Communication Systems, Ltd., Minato-ku Tokyo 108-0073 (JP)
(72) Inventor: IMASHIMIZU, Jun, Tokyo 108-8001 (JP); MATSUSE, Makiko, Tokyo 108-8001 (JP); KIGA, Yusuke, Tokyo 108-8001 (JP); OKABE, Takahiro, Tokyo 108-0073 (JP)
(74) Representative: Bamberger, Stephan
(86) International application number: PCT/JP2008/054453
(87) International publication number: WO 2008/126580

(57) **Abstract**

To provide a communication system which enables to mutually find out a presence status of a communication counterpart in real time between users of an instant message service and enables to transmit and receive a message to and from the communication counterpart who uses a different message type. An IPM server converts a message type of an instant message transmitted from an SMS client, an MMS client, or an IPM client so as to match that of a destination terminal, acquires presence status information indicating whether or not the clients are communicable, and notifies each of the clients of the acquired presence status information.

## Description

### TECHNICAL FIELD

The present invention relates to a communication system in which mobile communication terminals transmit and receive instant messages to and from each other via servers.

### BACKGROUND ART

A mobile instant messenger service has been provided to existing mobile telephones. With this service, users of communication terminals are allowed to use an instant messenger service through which the users can have chat with each other using text, voices, images, and the like on mobile terminals.

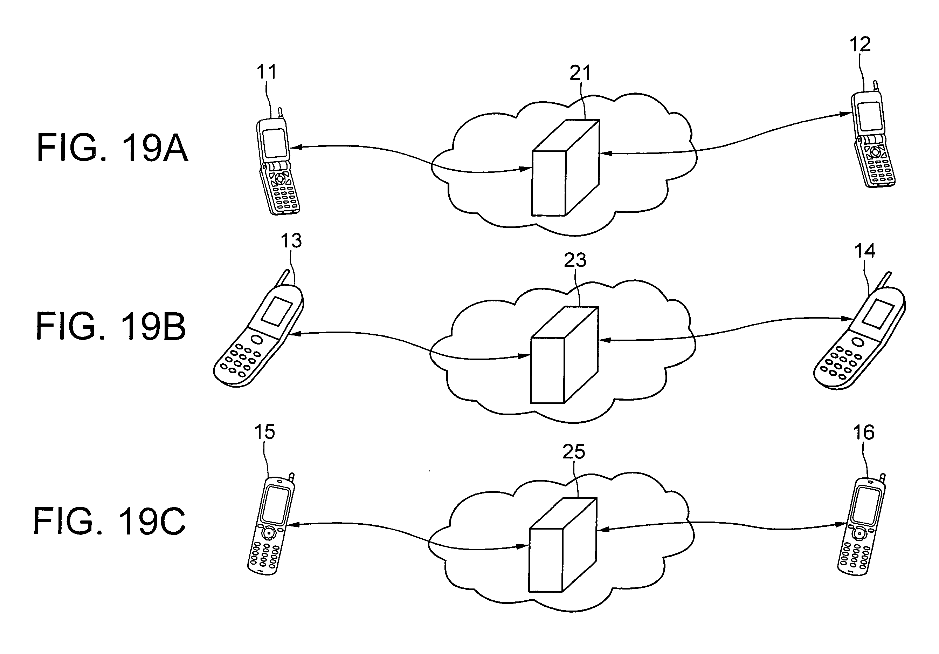

As shown in Fig. 19A, in the provided mobile instant messenger service, mobile terminals (hereinafter referred to as "SMS clients") 11 and 12 capable of utilizing short message service (SMS), which is an existing mobile message service, and an SMS server (hereinafter referred to as "SMSC") 21 providing the short message service to the SMS clients are included, and the SMS clients 11 and 12 transmit and receive short messages to/from each other via the SMSC 21.

Further, as shown in Fig. 19B, mobile terminals (hereinafter referred to as "MMS clients") 13 and 14 capable of utilizing multimedia message service (MMS), which is an existing mobile message server, and an MMS server ("hereinafter referred to as "MMSC") 22 providing the multimedia message service to the MMS clients are provided, and the MMS clients 13 and 14 transmit and receive the multimedia message service to/from each other via the MMSC 22.

Further, as shown in Fig. 19C, mobile terminals (hereinafter referred to as "MES clients") 15 and 16 capable of utilizing mobile e-mail service, which is an existing e-mail service (MES), and an MES server (hereinafter referred to as "MESC") 25 providing mobile E-mail service to the MES clients are provided, and the MES clients 15 and 16 transmit and receive instant messages to/from each other via the MESC 25.

In the mobile message services provided, as mobile messages of different message types are transmitted and received via different servers (servers) respectively, there is an inconvenience that messages cannot be transmitted and received in association between services of different message types.

In view of the above, a message system has been developed, in which a message gateway in the message system converts an SMS message type and an MMS message type to each other and relays and transfers them, so that messages can be transmitted and received between existing message services of different message types (see Patent Document 1).

Further, in the mobile instant messenger system provided, there has been a problem that communication status and conditions of a counterpart terminal user, with whom real-time communications will be performed, cannot be recognized before starting communications. In order to solve this problem, an instant messenger service system has been developed, in which a presence status information notification service for notifying each terminal of presence status information reflecting the calling status of the communication counterpart is incorporated in the mobile instant messenger service (Patent Document 2).
Patent Document 1: Japanese Patent Laid-Open Publication No. 2003-163953
Patent Document 2: Japanese Patent Laid-Open Publication No. 2006-191608

### DISCLOSURE OF THE INVENTION

### PROBLEMS TO BE SOLVED BY THE INVENTION

However, in the example shown in Patent Document 1, there has been a problem that communication status and conditions of the counter-part terminal user cannot be recognized before utilizing the instant message service, as described above.

Further, in the example shown in Patent Document 2, as it is not a system which associates existing message servers, there is a problem that it is difficult for the system to associate with or to be incorporated in the existing message systems.

Further, in the case of utilizing an instant messenger service provided by an internet service provider (ISP) (hereinafter referred to as "ISP-IM"), there is a problem that messages can be transmitted and received only between users registered beforehand as users of ISP-IM service.

In that case, there is also a problem that the users are required to acquire new accounts other than the telephone numbers unique to the mobile terminals, and messages cannot be transmitted and received with users whose accounts are unknown. Further, there is also a problem that even between the users registered in the same ISP-IM service, messages cannot be transmitted and received only between users who have been authenticated between them.

Further, as many services of ISP-IM are utilized on the Internet base and are not led by operators, there has been a disadvantage that it is difficult to charge the users for the services. Further, in the case where there are any changes in the contents of registered user information, the communication counterpart cannot find out changes in the registered contents unless the user notifies the counterpart of the changes by himself/herself.

It is an object of the present invention to provide a communication system enabling a user of an instant message service to find out a presence status of a communication counterpart in real time and enabling transmission and reception of messages between communication counterparts using different message types.

### MEANS FOR SOLVING THE PROBLEMS

In order to achieve the object, a communication system according to the present invention is a communication system for exchanging information using messages of different types, including a plurality of types of servers, each of which provides a service of different user interface for each message type, a mobile terminal which connects to a dedicated server among the plurality of servers by a user interface for the server, and a relay unit which establishes association between the servers. The relay unit determines a source mobile terminal and a destination address, interchanges user interfaces based on the determination result, and transmits a message including information of a communication status transmitted from the source mobile terminal, to an object server of the interchanged user interface.

Although the present invention is constructed as a communication system, the present invention is not limited to it and may be constructed as a relay device and a communication relay method for associating servers by being combined with existing servers. Further, the present invention may be constructed as a relay program as software.

A relay device according to the present invention is a relay device for relaying, between a plurality of types of servers, an exchange of information using a message between mobile terminals of different user interfaces, including a relay unit which determines a source mobile terminal and a destination address, interchanges user interfaces based on the determination result, and transmits a message including information of a communication status transmitted from the source mobile terminal, to an object server of the interchanged user interface.

A communication relay method according to the present invention is a communication relay method for relaying, between a plurality of types of servers, an exchange of information using a message between mobile terminals of different user interfaces. The method includes determining a source mobile terminal and a destination address, interchanging the user interfaces based on the determination result, and transmitting a message, including information transmitted from the source mobile terminal, to an object server of an interchanged user interface.

A relay program according to the present invention is a relay program for relaying and controlling, between a plurality of types of servers, an exchange of information using a message between mobile terminals of different user interfaces. The program causes a computer to execute a function of determining a source mobile terminal and a destination address, a function of interchanging the user interfaces based on the determination result, and a function of transmitting a message, including information transmitted from the source mobile terminal, to an object server of an interchanged user interface.

### EFFECTS OF THE INVENTION

In the present invention, a source mobile terminal and a destination address are determined, user interfaces are interchanged based on the determination result, and a message including information transmitted from the source mobile terminal is transmitted to an object server of the interchanged user interface. As such, an exchange of information by means of messages between mobile terminals of different user interfaces can be performed via servers of different user interfaces.

### BEST MODE FOR CARRYING OUT THE INVENTION

Hereinafter, exemplary embodiments of the invention will be described in detail based on the drawings.

Communication services for transmitting and receiving information using different types of messages have been developed mainly in Western countries. These services may be introduced in Japan, and in that case, communication services can be used with mobile terminals. These services include short message service (SMS), multimedia service (MMS), mobile e-mail service (MES), and instant message service (ISP-IM) provided by Internet providers.

Regarding the short message service, information is transmitted and received using only text message, and files including images and music cannot be attached. Further, the short message service has restrictions that the number of usable characters transmitted at one time is small, and that the service cannot be used between different carriers because the carriers providing the short message service are not associated with each other. Regarding the multimedia service, the service can be used only between mobile terminals supporting the multimedia service, and the service cannot be used between different carriers because the carriers providing the multimedia service are not associated with each other. Regarding the instant message service of ISP-IM, information is transmitted and received in a community where only previously registered users can exchange messages, that is, within a closed world, and information is exchanged using acquired accounts other than telephone numbers of the mobile telephones. Further, the instant message service of ISP-IM is provided by each carrier, there is no compatibility among the services provided by various carriers.

Further, these various services are provided using different user interfaces (communication protocol, data format, etc.), respectively. This means various types of servers provide services independently for respective message types using different user interfaces. As such, a mobile terminal uses a service by connecting to a dedicated server via a user interface for each server.

An exemplary embodiment of the invention provides a communication system which provides users with services between different user interfaces while resolving restrictions by user interfaces and incompatibility of services, while considering economic advantage of carriers.

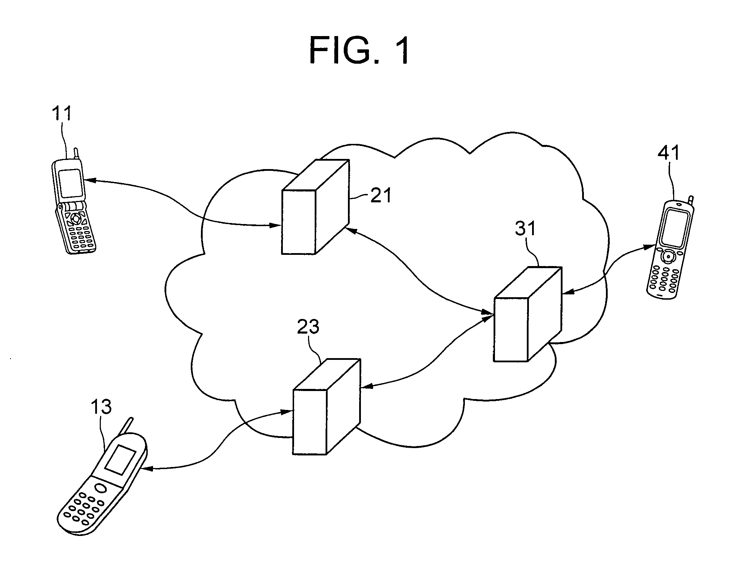

As shown in Fig. 1, a communication system according to an exemplary embodiment of the invention is a communication system for transmitting and receiving information using different types of messages, and includes, as a basic configuration, a plurality of types of servers 21 and 23 each of which provides a different service of different user interface for each message type, mobile terminals 11, 13, and 41 each of which connects to a dedicated server via a user interface for each server, and a relay unit 31 which establishes association between the servers. The relay unit 31 is configured to determine the source mobile terminal 11, 13, or 41 and a destination address, and based on the determination result, interchanges user interfaces, and transmits a message including information transmitted from the source mobile terminal to an object server of the interchanged user interface.

While the mobile terminals 11, 13, and 41 may be of various types, description will be given for a mobile telephone having the highest penetration in the world as an example.

Although the relay unit 31 has a function of establishing association between the servers 21 and 23 as a basic configuration, in the example shown in Fig. 1, the relay unit 31 has a function as a server which provides, to the source mobile terminal 41 performing an access using the telephone number of the mobile telephone 41 as the transmission address, a service using a message via a user interface corresponding to the telephone number. This means that the server by the relay unit 31 is a server which is newly proposed in the exemplary embodiment, and the server works as a new server (IPM server) to the mobile telephone 41 accessed with use of the telephone number as the destination address.

Further, although the example of Fig. 1 shows the SMSC server 12 which provides a short message service and the MMSC server 23 which provides a multimedia service as servers, servers are not limited to them, and an MES server which provides a mobile e-mail service may be added. Further, although one SMSC server 12 and one MMSC server 23 are shown, the number thereof is not limited to one. A plurality of SMSC servers 21 and MMSC servers 23 of different carriers may be provided together. Note that the below description is based on the premise that the relay unit 31 is configured to have both a function of associating the servers 21 and 23 and a function as an IPM server.

In the exemplary embodiment, a case where bidirectional communications are performed among the servers 21, 23, and 31 providing different services and services provided by the respective servers 21, 23, and 31 are provided to the mobile telephones 11, 13, and 41 will be described.

When exchanging information using messages, relating to the mobile telephones 13 and 41 which are communication counterparts, a user of the mobile telephone 11 associates the telephone number of the self device, an account and a telephone number of the mobile telephone 13 for receiving a service provided by the MMSC server 23, and an account and a telephone number of the mobile telephone 41 for receiving a service provided by the IPM server 31, and registers them in the IPM server 31 via the SMSC server 21.

Similarly, relating to the mobile telephones 11 and 41 which are communication counterparts, a user of the mobile telephone 13 associates the account and the telephone number of the self device for receiving a service provided by the MMSC server 23, a telephone number of the mobile telephone 11 for receiving a service provided by the SMSC server 21, and an account and a telephone number of the mobile telephone 41 for receiving a service provided by the IPM server 31, and registers them in the IPM server 31 via the MMSC server 23.

Similarly, relating to the mobile telephones 11 and 13 which are communication counterparts, a user of the mobile telephone 41 associates an account and the telephone number of the self device for receiving a service provided by the IPM server 31, the telephone number of the mobile telephone 11 for receiving a service provided by the SMSC server 21, and the account and the telephone number of the mobile telephone 13 for receiving a service provided by the MMSC server 23, and registers them in the IPM server 31.

The registration procedures by the users of the mobile telephones 11, 13, and 31 are necessary procedures for specifying the communication counterparts, and are substantially different from advance registration in a closed community for receiving the instant message service of ISP-IM. The registration procedures are open to the entire users having mobile telephones of different user interfaces.

A case where an information exchange using messages is performed between the mobile telephone 11 receiving the short message service by the SMSC server 21 and the mobile telephones 13 receiving the multimedia service by the MMSC server 23, both of which have finished the registration procedures, will be described.

The user of the mobile telephone 11 associates information indicating a communication status of the self device which is the mobile telephone 11, that is, information indicating a communication status such as the user of the mobile telephone 11 being tired or busy for example, and the telephone number of the mobile telephone 13 of the communication counterpart, and transmits them to the SMSC server 21. Note that contents (the information and the telephone number) from the mobile telephone 11 are transmitted in a text format. When the SMSC server 21 receives information of the communication status from the mobile telephone 11, the SMSC server 21 transmits the information to the IPM server 31.

Upon reception of the information of the communication status of the mobile telephone 11 from the SMSC server 21, the IPM server 31 determines the mobile telephone 11 of the source and the destination address, based on registered data associating the mobile terminal 11 and the mobile terminal 13. The IPM server 31 functions as a relay unit, and when the IPM server 31 determines that the source is the mobile telephone 11 and the destination address is the mobile telephone 13 connected to the MMSC server 23, the IPM server 31 interchanges the user interface used for transmitting the content from the SMSC serve 21 to the user interface linking the MMSC server 23 and the mobile telephone 13 based on the determination result, and transmits a message including the information of the communication status transmitted from the mobile terminal 11, to the object MMSC server 23 of the interchanged user interface. The IPM server 31 transmits the message to be transmitted to the MMSC server 23 in a format conforming to the multimedia service provided by the MMSC server 23.

In a state of functioning as a server, when the IPM server 31 receives the information of the communication status from the mobile telephone 41 for the mobile telephone 13, the IPM server 31 interchanges the user interface linking the mobile telephone 41 and the IPM server 31 to the user interface linking the mobile telephone 13 and the MMSC server 23, and transmits the message including the information of the communication status transmitted from the mobile terminal 41 to the object MMSC server 23 of the interchanged user interface.

When the MMSC server 23 receives the message from the IPM server (relay unit) 31, the MMSC server 23 transmits the message to the mobile telephone 13. Based on the message delivered to the mobile telephone 13, the user identifies the communication status of the mobile telephone 11 or the mobile terminal 41. Further, in the mobile telephone 13, the information of the communication status of the mobile telephone transmitted from the IPM server 31 is classified for respective communication targets and stored in a message list provided in addition to a transmission/reception box for e-mail. Further, in the mobile telephone, the message transmitted from the counterpart mobile telephone is stored in a dialogue form. Note that storage of the information by the mobile telephone 13 is the same for the mobile telephones 11 and 41.

When the user of the counterpart mobile telephone 11 or 41 desires to exchange information using messages based on the received information of the communication status, the user of the mobile telephone 13 transmits a necessary message to the MMSC server 23. The MMSC server 23 transmits the message from the mobile telephone 13 to the IPM server 31.

Upon receiving the message from the MMSC server 3, the IPM server 3 functions as a relay unit. Then, the IPM server 31 determines the source mobile terminal 13 and the destination address based on the stored telephone number. If the destination address is the mobile telephone 11, the IPM server 31 converts the message from the mobile telephone 13 into a text format, and transmits the converted message to the SMSC server 21. If the destination address is the mobile telephone 41, the IPM server 31 converts the message from the mobile telephone 13 into a data format which can be recognized by the mobile telephone 41, and transmits a notification that it has received the converted message to the mobile telephone 41.

Upon receiving the message from the IPM server 31, the SMSC server 21 transmits the message to the mobile telephone 11. Through the procedures described above, an information exchange using a message is performed between the mobile telephone 11 belonging to the SMSC server 21 and the mobile telephone 13 belonging to the MMSC server 23.

Further, when the user of the mobile telephone 41 receives the notification from the IPM server 31, the user accesses the IPM server 31 based on the telephone number, and requests the IPM server 31 to acquire the message. The IPM server 31 determines an access from the mobile telephone 41 based on the stored telephone number, and activates application software and displays the message. When displaying the message, the IPM server 31 incorporates additional information, such as advertisement information, to the message.

The user of the mobile telephone 41 checks the message displayed by the IPM server 31, and downloads the message to the mobile telephone 41 if necessary. Through the procedures described above, an information exchange using a message is performed between the mobile telephone 13 belonging to the MMSC server 23 and the mobile telephone 41 belonging to the IPM server 31.

Although the exemplary embodiment has been constructed as a communication system in the above description, it is not limited to this configuration. If the servers 21 and 23 have been installed, the exemplary embodiment may be constructed as a relay device having the relay unit 31 for associating the servers by being combined with those installed servers 21 and 23. Further, the exemplary embodiment may be constructed as a relay program for causing a computer to execute the function performed by the relay unit.

As described above, according to the exemplary embodiment, it is possible to provide services between different user interfaces to users while solving limitations and incompatibility of services caused by user interfaces, and to perform an information exchange without being aware of the type supported by the counterpart.

Further, according to the exemplary embodiment, as it is possible to incorporate additional information such as advertisement information to the message transmitted from a mobile terminal, a carrier operating the server may receive an advertisement fee in addition to a packet fee received for message communications if additional information is advertisement information. As such, the exemplary embodiment is able to provide a communication system while providing economic advantages to the carrier.

As the source mobile terminal and the destination address are determined based on data of a telephone number given to the mobile telephone, transmission and reception of messages can be performed using the telephone number. As such, if the telephone number of the counterpart mobile telephone is known, it is possible to perform an information exchange by messages based on telephone numbers without using e-mail addresses with anyone in the world.

Further, previous registration in a closed world, which is required for instant messages of IPS-IM provided by a provider, is not necessary. The procedures of the exemplary embodiment are registration procedures open to all mobile telephones, and an address book which has been registered in the mobile telephone can be used as it is. As such, it is possible to prevent applying unnecessary burden to the user.

Further, as pieces of information exchanged using messages are classified for respective communication counterparts and stored in a message list of the mobile terminal, it is possible to check the contents which have been exchanged before for respective communication counterparts. Further, as information exchanged using messages is stored in a dialogue form in the mobile terminal, a flow of information exchange can be checked on the screen.

Next, the exemplary embodiment will be described in more detail based on specific examples.

As shown in Fig. 1, the communication system according to the exemplary embodiment includes the mobile telephone 11 belonging to the SMSC server 21, the mobile telephone 13 belonging to the MMSC server 23, the SMSC server 21 providing a short message service to the mobile telephone 11, and the MMSC server 23 providing a multimedia service to the mobile telephone 13.

The communication system also includes the IPM server 31. The IPM server 31 has a function as a relay unit which associates the SMSC server 21 and the MMSC server 23 and a function as a server which provides services to the mobile telephone 41. The IPM server 31 and the mobile telephone 41 are connected wirelessly, and the IPM server 31 provides the instant message service to the mobile telephone 41 accessed based on the telephone number.

As the respective mobile telephones 11, 13, and 41 are devices working as clients of the servers 21, 23, and 31, the mobile telephone 11 will be referred to as an SMS client, the mobile telephone 13 will be referred to as an MMS client, and the mobile telephone 41 will be referred to as an IPM client in the below description.

In this configuration, the IPM client 41 and the SMS client 11 or the MMS client 13 transmit and receive messages to and from each other. Further, other than the configuration shown in Fig. 1, the system may have a plurality of IPM clients having been connected to the IPM server 31 and utilizing an instant message service provided by the IPM server 31. Further, in addition to the above configuration, an SMS server having the same functional characteristics as those of the SMS server 21 and an MMS server having the same functional characteristics as those of the MMS server 23 may be associated by the IPM server 31 in the same manner as the SMS server 21 and the MMS server 23.

This will be described in detail below. The SMS client 11 is assumed to be a mobile communication terminal utilizing the message service with use of SMS (Short Message Service) which is an existing technique. For example, the SMS installed in an existing mobile telephone is a service with which a text message of a certain length can be transmitted and received to and from the SMS client, and character data up to about 168 byte can be communicated via the SMS servers 21 and 22.

The SMS client 11 transmits information indicating a communication status of the SMS client 11, that is, presence status information indicating whether or not the user is currently communicable or current feeling and conditions of the user for example, to the IPM server 31 via the predetermined SMS server 21, and transmits presence status information newly set in the SMS client 11 to the IPM server 31 as a presence update registration request. Note that in each of the clients of the exemplary embodiment, presence status information including "happy", "tired", "excited", "busy", and "unconnected" has been set beforehand.

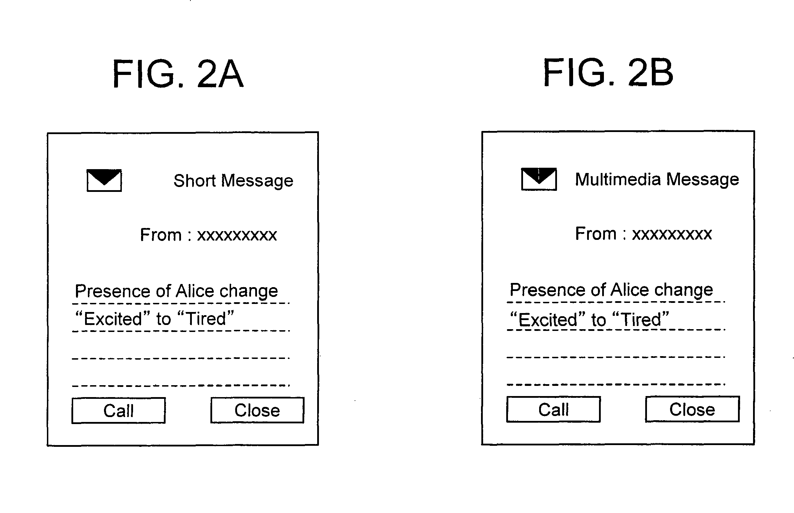

The SMS client 11 also receives presence status information (information indicating the communication status of the mobile telephone) of the IPM client 41 notified from the IPM server 31 and presence status update information indicating the updated contents of the presence status information, and displays the contents of the presence status information and the presence status update information on the screen as shown in Fig. 2A.

Further, the SMS client 11 transmits and receives messages to and from the IPM client 41 via the IPM server 31. In this exemplary embodiment, the SMS client 11 designates the counterpart client terminal (IPM client 41), to whom it transmits an instant message, by the telephone number. Thereby, an instant message is transmitted to the IPM client by the same procedure as that of the existing short mail service (SMS).

Next, the MMS client 13 is a client terminal utilizing the existing multi-message service which is the same as the SMS client 11 described above, and in the exemplary embodiment, it is assumed to be a mobile communication terminal capable of transmitting and receiving voice and images in addition to text data. The MMS (Multimedia Message Service) installed in the existing mobile telephone is a service with which a text message of a certain length, voice and images can be transmitted and received between MMS clients.

The MMS client 13 transmits information indicating a communication status of the MMS client 13, that is, presence status information indicating whether or not the user is currently communicable or current feeling and conditions of the user for example, to the IPM server 31 via the MMS server 23 which has been set beforehand, and transmits presence status information newly set in the MMS client 13 to the IPM server 31 as a presence update registration request. Note that in each of the client terminals of the exemplary embodiment, presence status information including "happy", "tired", "excited", "busy", and "unconnected" is set beforehand. Further, the MMS client 13 receives the presence status information of the IPM client 41 notified from the IPM server 31 and presence status update information indicating the updated contents of the presence status information, and displays the contents of the presence status information and the presence status update information on the screen as shown in Fig. 2B.

Further, the MMS client 13 transmits and receives an instant message to and from the IPM client 41 via the IPM server 31. In this exemplary embodiment, the MMS client 13 designates the counterpart client terminal (IPM client 41), to whom an IP message is transmitted, by the telephone number. Thereby, the MMS client 13 transmits an instant message to the IPM client 41 by the same procedure as that of the existing MMS.

As described above, the SMSC server 21 is an SMS messenger server which provides a short message service (SMS) between existing SMS clients, and performs communication relay and control of SMS. The SMSC server 21 transfers, to the IPM server 31, the presence status information (information indicating the communication status of the mobile telephone) of the SMS client transmitted from the SMS client 11, and transfers and notifies the presence status information and the presence status update information of the IPM client 41 transmitted from the IPM server 31 to the SMS client 11. Note that the presence status information and the presence status update information are transmitted and received as an IP message, in which the message type is an SMS format, in the communications between the SMS client and the IPM server 31.

Further, the SMSC server 21 transfers an IP message (SMS message) transmitted from the SMS client 11 and destined for the IPM client 41 to the IPM server 31, and transfers an IP message (SMS message) transmitted from the IPM client 41 via the IPM server 31 to the SMS client 11. Further, the SMSC server 21 relays and transfers a presence change notifying signal and a message incoming notification signal which are transmitted from the IPM server 31 to the IPM client 41.

As described above, the MMS server 23 is a server which provides MMS (Multimedia Message Service) used between existing MMS clients and performs communication relay and control of MMS. The MMSC server 23 transfers presence status information of the MMS client (user) transmitted from the MMS client 13 to the IPM server 31, and transfers and notifies the presence status information and the presence status update information of the IPM client 41 transmitted from the IPM server 31 to the MMS client 13. Note that presence status information and the presence status update information are transmitted and received between the MMS client 23 and the IPM server 31 as an IP message of MMS format.

Further, the MMSC server 23 transfers an IP message (MMS message), transmitted from the MMS client 13 and destined for the IPM client 41, to the IPM server 31, and transfers an IP message (MMS message), transmitted from the IPM client 41 via the IPM server 31, to the MMS client 13.

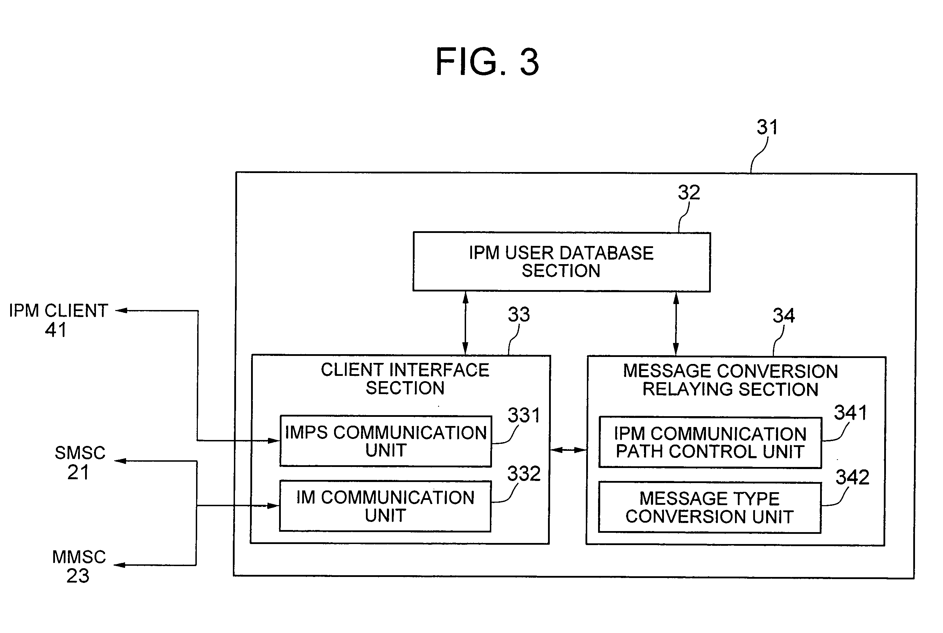

As shown in Fig. 3, the IPM (IP Message) server 31 includes an IPM user database section 32 which manages presence status information, IP messages, terminal user information, and message type information of the respective client terminals, a client interface section 33 which performs transmission and reception of IP messages transmitted from the respective terminals, and a message conversion relaying section 34 which converts message types based on the information registered in the IPM user database section 32.

The client interface section 33 includes an IMPS communication unit 331 which establishes mutual communication sessions between IPM clients and controls the communication sessions, and an IM communication unit 332 which establishes communication sessions of communication protocol between the IPM client and a client terminal other than the IPM client and controls the communication session and performs transmission and reception.

The message conversion relaying unit 34 includes an IPM communication path control unit 341 which specifies a source and a destination (transfer destination) of communications between the client terminals performed via the IPM server 31 and performs a routing process of the communications, and a message type conversion unit 342 which converts the message type in accordance with the destination terminal of the communications.

The IPM user database section 32 holds the latest status of presence status information regarding the respective client terminals, temporarily stores IP messages transmitted and received between the respective client terminals, and manages message type information used in the respective client terminals. The IPM user database section 32 may also store user information including telephone numbers of the respective client terminals, addresses, and date of birth. With the IPM user database section 32, when the user of any of the client terminals changes his/her telephone number or address, the changed content can be notified to the users of the client terminals registered beforehand via the IPM user database section 32 by changing the user information of the client terminal.

The IMPS communication unit 331 of the client interface section 33 stores the presence status information and the presence update registration request transmitted from each IPM client in the IPM user database section 32, and replies and notifies that update registration has been completed with respect to the received presence update registration request. When there is any update in the presence status information of each client terminal stored in the IPM user database section 32, the IMPS communication unit 331 notifies the IPM client of a presence change notification signal (hereinafter referred to as "CIR signal 1") indicating the change, and notifies the IPM client of the transfer destination of a message incoming notification signal (hereinafter referred to as "CIR signal 2") indicating that a new IP message is stored in the IPM user database section 32.

The IMPS communication unit 331 may be set such that the CIR signal 2 is transmitted via a preset messenger server (e.g., SMSC server 22). Further, the IMPS communication unit 331 sends back presence status update information corresponding to the presence update notification request transmitted from the IPM client, and sends back, to the IPM client, an IP message in IMPS format corresponding to the message acquisition request from the IPM client.

The IM communication unit 332 stores a presence update registration request transmitted from each messenger server in the IPM user database section 32, transmits presence status update information in which the message type is converted to be adapted to each client terminal via each corresponding messenger server, and transmits an IP message in which the message type is converted to be adapted to each client terminal via each corresponding messenger server.

The message type conversion unit 342 of the message conversion relaying section 34 determines the terminal type of the source and the transfer destination of an IP message transmitted from each client terminal, and converts the message type of the IP message so as to be adapted to the terminal type of the transfer destination. The message type conversion unit 342 also stores the converted IP message in the IPM user database section 32, and deletes the IP message having been transmitted to the transfer destination from the IPM user database section 32.

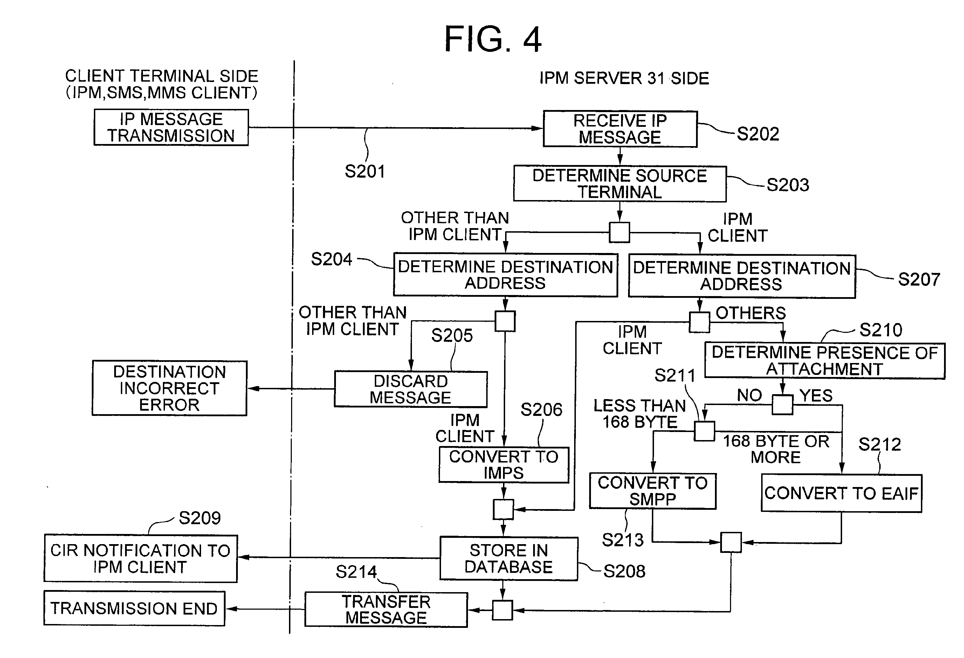

Next, a relay communication operation of the IPM server 31 for an IP message transmitted from each client terminal will be described based on the flowchart of Fig. 4.

First, an IP message is transmitted from any one of the IPM client 41, the SMS client 11 and the MMS client 13 to the IPM server 31 (step S201). The IPM server 31 receives the IP message (step S202), and determines the source terminal of the IP message (step S203). If the source client of the IP message is other than the IPM client (that is, SMS client or MMS client), the IPM server 31 determines the destination address of the message (step S204).

If the destination of the message is other than the IPM client, the IPM server 31 discards the message and transmits destination incorrect error (step S205). This is performed in order that the IPM server 31 of the exemplary embodiment may not relay a message between the SMSC server 21 and the MMSC server 22, for example. As such, in the exemplary embodiment, the destination (transfer destination) of the IP message transmitted from the SMS client 11 or the MMS client 13 to the IPM server 31 will be the IPM client 41.

If it is determined that the destination address is the IPM client at step S204, the IPM server 31 converts the received IP message into IMPS format (step S206). Then, the IPM server 31 stores the converted IP message in the IPM user database section 32 (step S208), and notifies the IPM client 41 of the CIR message (step S209). Then, the IPM server 31 transmits the converted IP message to the IPM client 41 (step S214).

Further, if it is determined that the source terminal of the IP message is the IPM client 41 at step S203, the IPM server 31 determines the destination address of the IP message (step S207). If it is determined that the destination address of the IP message is the IPM client, the IPM server 31 stores the IP message in the IPM user database section 32 (step S208), and notifies the IPM client 41 of the CIR message (step S209). Then, the IPM server 31 transmits the converted IP message to the IPM client 41 (step S214).

If it is determined that the destination address of the message is other than the IPM client, that is, the SMS client 11 or the MMS client 13 in step S207, the IPM server 31 determines whether or not the IP message has an attached file (step S210).

If the IPM server 31 determines that an attached file is included, the IPM server 31 converts the data format of the IP message into EAIF (step S212). In contrast, if the IPM server 31 determines that an attached file is not included, the IPM server 31 determines the message size (step S211). Then, if the IPM server 31 determines that the message size is smaller than 168 byte, the IPM server 31 converts the data format of the message into SMPP (Short Message Peer to Peer Protocol) (step S213), and if the IPM server 31 determines that the message size is 168 byte or larger, the IPM server 31 converts the data format of the message into EAIF (External Application Inter Face) (step S212). Then, the IPM server 31 transmits the converted IP message to the destination (step S214).

The IPM client 41 (and 42, 43, ···) is assumed to be a mobile communication terminal which transmits and receives IP messages of IMPS format and presence status information with the IPM server 31 using the IMPS (Instant Message & Presence Service) protocol of the exemplary embodiment. The IPM client 41 is a client terminal using an instant message presence service (IMP service) provided by the IPM server 31 as described above, and in the exemplary embodiment, the terminal is assumed to be a mobile communication terminal which transmits and receives text data, voice, images, and pictures in IMPS format.

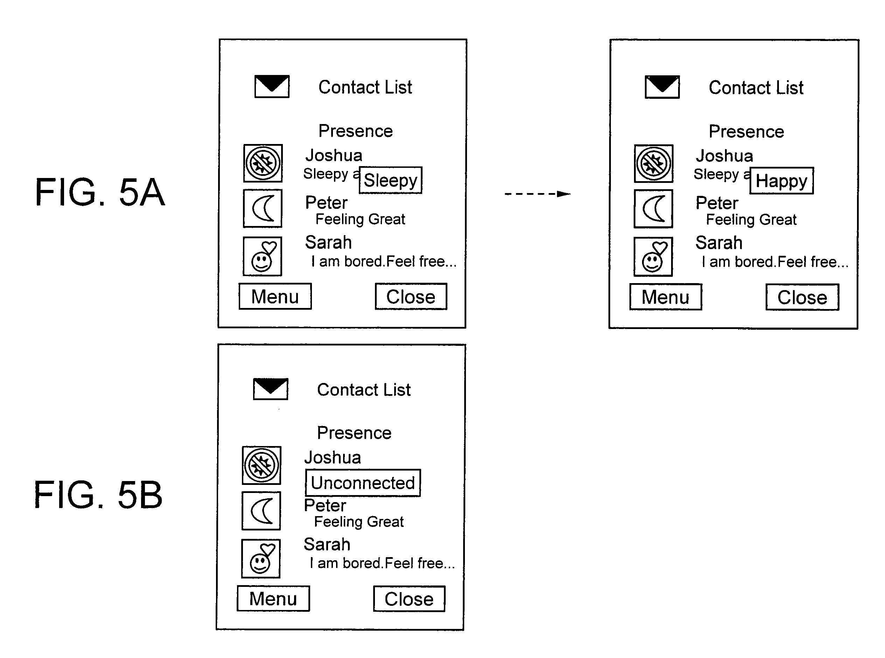

The IPM client 41 transmits presence status information in IMPS format including whether it is currently communicable with the users of the SMS client, the MMS client and the other IPM clients, or current feeling and conditions of the user, to the IPM server 31 via the predetermined IPM server 31, and transmits a presence update registration request for requesting update registration of the presence status information. Note that presence status information including "happy", "tired", "excited", "busy", and "unconnected" have been set beforehand in each of the client terminals of the exemplary embodiment. Further, the IPM client 41 receives the presence status information of each client terminal notified from the IPM server 31 and presence status update information indicating updated contents of the presence status information, and displays the notified presence status information and its updated contents on the screen as shown in Fig. 5A.

Further, the IPM client 41 creates an IP message, and transmits and receives the IP message with any of the SMS client, the MMS client, and the other IPM client via the IPM server 31. The IPM client 41 designates a counterpart client terminal, to which the IP message is transmitted, by the telephone number. Thereby, an instant message can be transmitted and received through the same procedure as that of existing SMS and MMS.

The IPM client 41 also has a presence information storing unit which stores presence status information of a predetermined client terminal. The presence status storing unit stores presence status information of each client terminal notified via the IPM server 31, and updates and sets the stored presence status information of each client terminal using the updated contents of the newly received presence status information. Further, the IPM client 41 may regularly acquire the presence status information of the predetermined client terminal from the IPM user database section of the IPM server 31.

The presence status information of each client terminal stored in the presence status storing unit is shown on a display of the IPM client 41 as shown in Fig. 5B. Thereby, the user of the IPM client 41 can check the presence status information such as a communication status and feeling of the preset client terminal user before starting messenger communications. For example, if the presence status information of the counterpart user is "busy" or "unconnected", the user of the IPM client 41 can decide that a real time communication cannot be made with the counterpart user currently. In that case, the IPM client user can select a communication method including refraining from messenger communications or notifying the subject by e-mail, according to the status of the destination user.

Further, if there is any change in the presence status information of the IPM client 41, the IPM client 41 automatically transmits the changed content of the presence status information to the IPM server 31. Thereby, the presence status information held by the IPM client 41 and the content of the IPM user database section of the IPM server 31 can be automatically synchronized.

Next, the operation of the overall communication system according to the exemplary embodiment will be described.

First, communication status information (presence status information), indicating whether or not each client terminal is communicable, is registered in the IPM server 31. Then, the IPM server 31 notifies the predetermined IPM client 41 and the SMS client 11 of the registered presence status information (Also, the IPM server 31 acquires presence status information from the SMS client 11 and the IPM client 41, and performs update setting of the stored presence status information. Then, when the SMS client 11 transmits an instant message to the IPM client 41, the IPM server 31 converts the message type of the received instant message based on the destination terminal and transmits the converted instant message).

Further, communication status information (presence status information), indicating whether or not each client terminal is communicable, is registered in the IPM server 31. Then, the IPM server 31 notifies the predetermined IPM client 41 and the SMS client 11 of the registered presence status information. Further, the IPM server 31 acquires presence status information from the SMS client 11 and the IPM client 41, and performs update setting of the stored presence status information. Then, the IPM client transmits an instant message to the SMS client, and then, the IPM server 31 converts the message type of the received instant message based on the destination terminal and transmits the converted instant message.

Note that the contents executed by the IPM server 31 may be configured as a program to be executed by a computer.

Now, an operation of notifying update of presence status information and an operation of transmitting and receiving an IP message performed between the IPM client 41 and the SMS client 11 will be described first. Then, an operation of notifying update of presence status information and an operation of transmitting and receiving IP messages performed between the IPM client 41 and the MMS client 13 will be described.

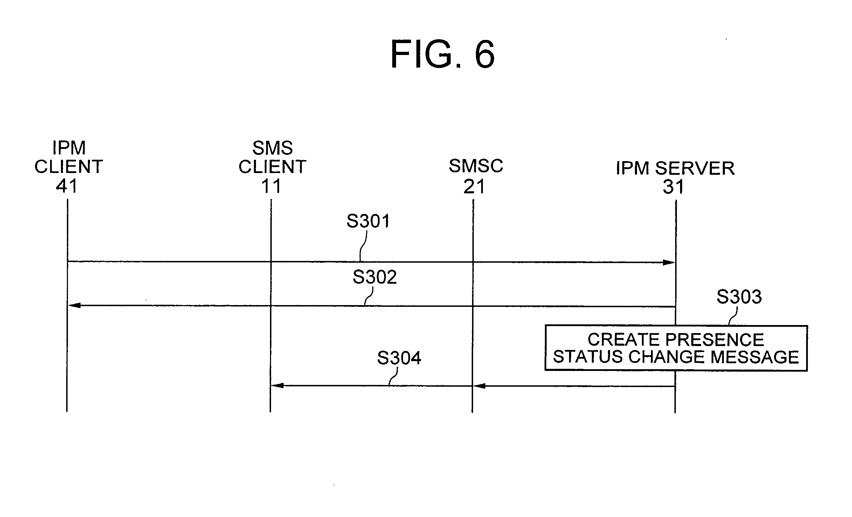

First, an operation in which the IPM client 41 updates presence status information and the updated content is received by the SMS client 11 will be described based on the sequence chart of Fig. 6.

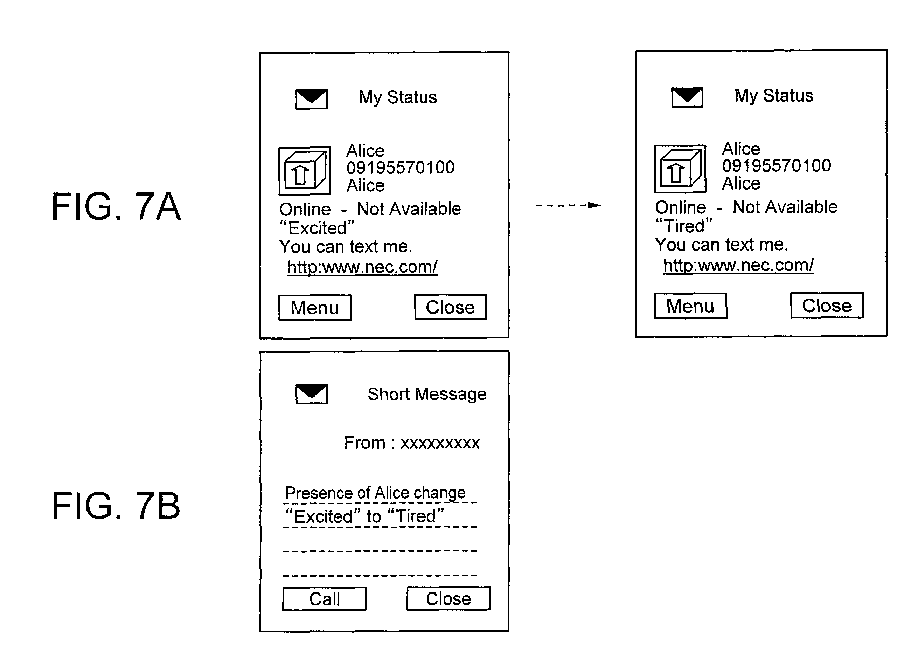

First, the IPM client 41 transmits a content change (update) of the registered presence status to the IPM server 31 as a presence update registration request (step S301). In this exemplary embodiment, as the IPM client 41 changes the presence status information from "Excited" to "Tired" as shown in Fig. 7A, a presence update registration request is transmitted. Then, the IPM server 31 receives this presence update registration request and registers it in the IPM user database section 32, and sends back an update registration response indicating that update registration of the presence status has been completed, to the IPM client 41 (step S302). Then, the IPM server 31 creates a presence status change message indicating the changed content of the presence status information of the IPM client 41 based on the received presence update registration request (step S303), and transmits the presence status change message to the SMS client 11 via the SMSC 21 (step S304).

Thereby, as shown in Fig. 7B, in the SMS client 11 receiving the presence status change message, the changed content of the presence status of the IPM client 41 (user name: Alice) is displayed on the screen as an IP message in SMS format. Thereby, the user of the SMS client 11 finds out the changed content of the presence status of the IPM client 41.

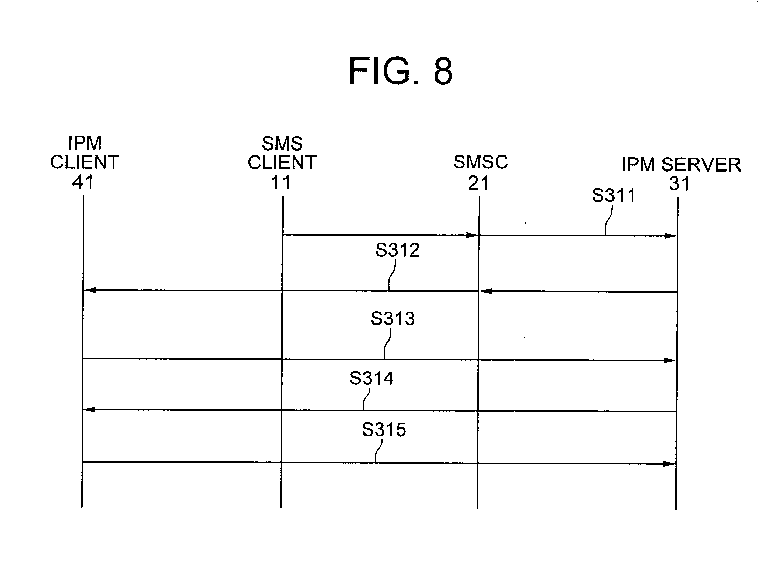

Then, an operation in which the SMS client 11 updates the presence status information and the IPM client 41 receives this updated content will be described based on the sequence chart of Fig. 8.

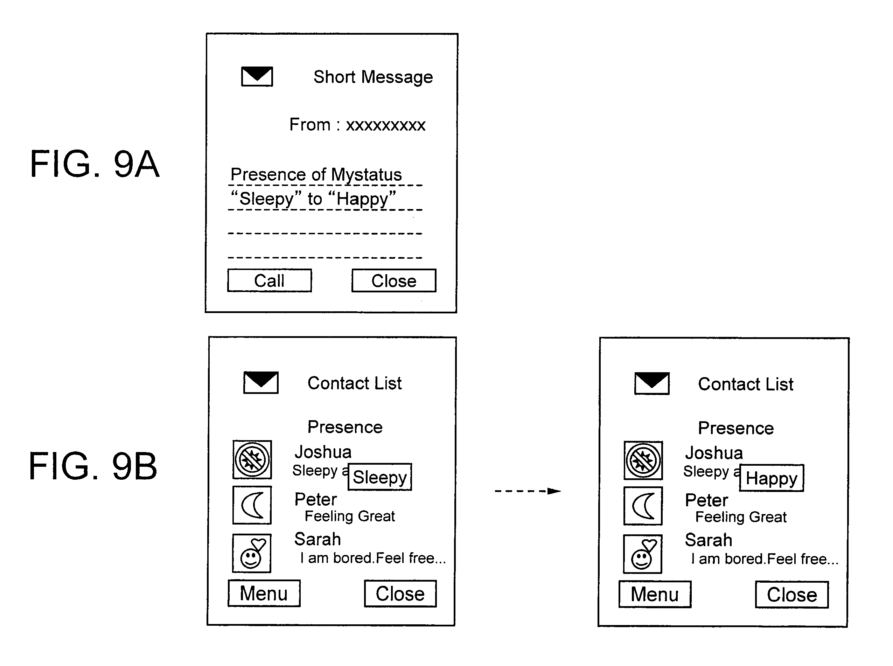

First, the SMS client 11 transmits a change (update) in the presence status to the IPM server 31 via the SMSC 21 as a presence update registration request (step S311). In this exemplary embodiment, as shown in Fig. 9A, a fact that the presence status information of the SMS client 11 is changed from "sleepy" to "happy" is notified to the IPM server 31 as an IP message in SMS format.

Then, the IPM server 31 receives the presence update registration request, and transmits a presence change notification signal (hereinafter referred to as "CIR signal 1 ") notifying that the presence status information of the SMS client 11 is changed, to the IPM client 41 (step S312). The IPM client 41 receives the CIR signal 1, and transmits a message requesting the updated content of the presence status information (hereinafter referred to as "presence update notification request") of the SMS client 11, to the IPM server 31 (step S313).

In response to the presence update notification request, the IPM server 31 transmits presence status update information of the SMS client 11 in IMPS format (step S314). Based on the notified presence status update information, the IPM client 41 updates and sets the presence status settings of the SMS client 11 stored in the IPM client 41. In this exemplary embodiment, the presence status setting of the SMS client 11 (user name: Joshua) is changed from "Sleepy" to "Happy", as shown in Fig. 9B.
Then, the IPM client 41 transmits an update completion notification notifying that the presence status setting stored in the IPM client 41 is adequately updated, to the IPM server 31 (step S315).

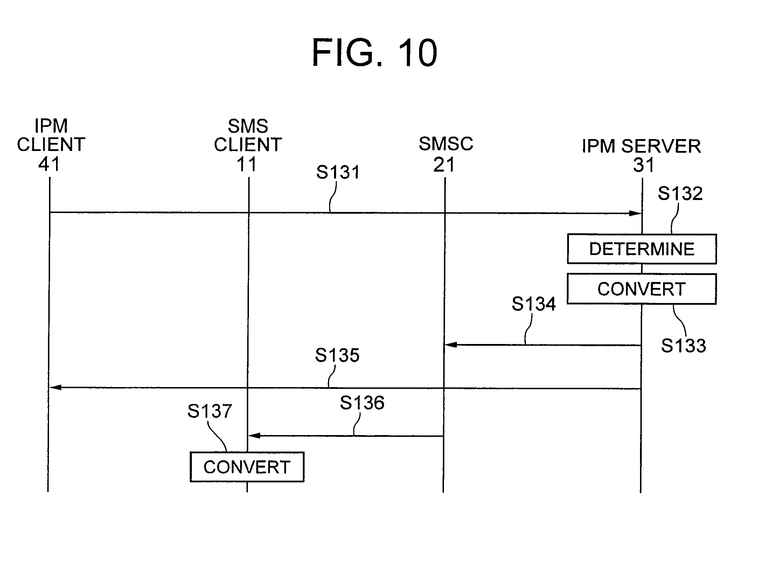

Next, an operation until an IP message created and transmitted by the IPM client 41 is received by the SMS client 11 will be described based on the sequence chart of Fig. 10.

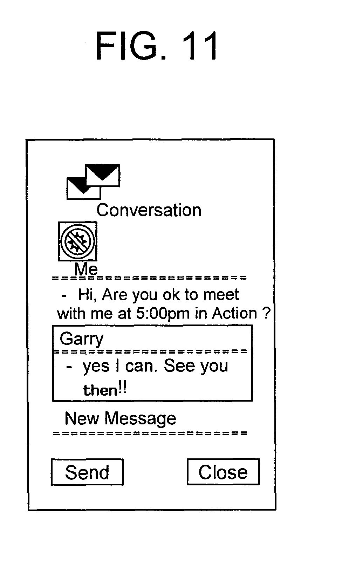

First, the IPM client 41 transmits a created IP message to the SMS client 11 (step S101). As shown in Fig. 11, the IPM client 41 transmits the IP message input in the message creation screen when the "send" button is clicked. This IP message is transmitted to the IPM server 31 in IMPS format. The IPM server 31 receives the message from the IPM client 41 and determines the message type of the destination (transfer destination) terminal of the message (step S102). In this exemplary embodiment, the message type of the received IP message is converted from IMPS format to SMS format (step S103).

Then, the IPM server 31 transmits the converted message to the SMSC 21 (step S104), and transmits a transmission success signal (200) to the IPM client 41 via the SMSC 21 (step S105). Then, the SMSC 21 transmits (transfers) the IP message transmitted from the IPM server 31 to the SMS client 11 (step S106). The SMS client 11 receives the IP message transmitted from the SMSC 21 and displays the IP message (step S107).

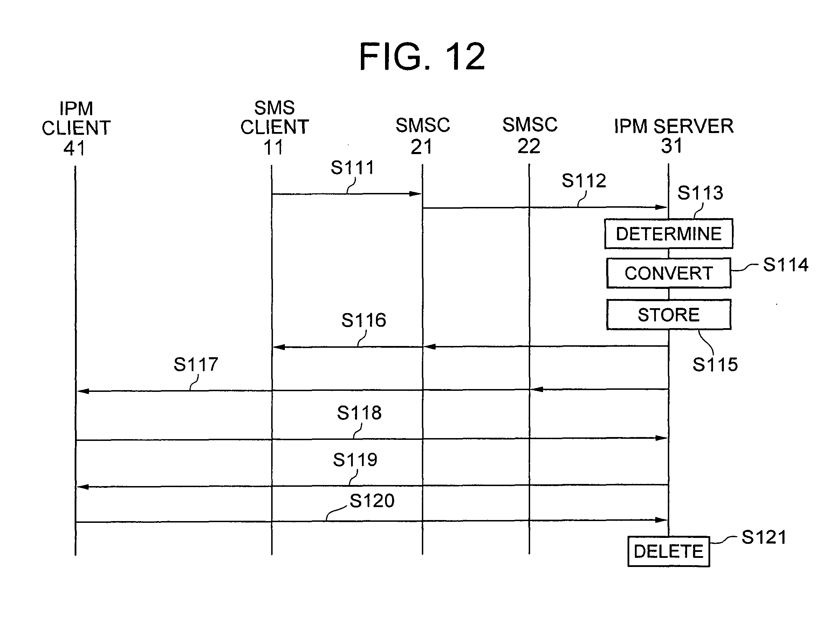

Next, an operation until an IP message created and transmitted by the SMS client 11 is received by the IPM client 41 will be described based on the sequence chart of Fig. 12.

First, the SMS client 11 transmits an IP message created for the IPM client 41 to the SMSC 21 (step S111). Then, the SMSC 21 receives this IP message and transmits it to the IPM server 31 (step S 112).

Then, the IPM server 31 determines the message type of the transfer destination (IPM client 41) of the IP message (step S113), and converts the IP message into IMPS format (step S114). Then, the IPM server 31 stores the IP message in the IPM user database section 32 (step S 115), and transmits a transmission success signal (0x0000000) as a response signal to the SMS client 11 via the SMSC 21 (step S116).

Then, the IPM server 31 transmits a message incoming notification signal (hereinafter referred to as "CIR signal 2") to the IPM client 41 via the preset SMSC 22 (step S 117). The IPM server 31 may transmits the CIR signal 2 via the preset SMSC 21.

Then, the IPM client 41 receives the CIR signal 2 and transmits an IP message acquisition request to the IPM server 31 (step S118). The IPM server 31 receives the message acquisition request and sends back a message corresponding to the message acquisition request, to the IPM client 41 (step S 119).

Then, the IPM client 41 receives the IP message and transmits an IP message reception reply indicating successful reception of the IP message to the IPM server 31 (step S120). Finally, the IPM server 31 which received the message reception reply deletes the message from the IPM user database (step S121).

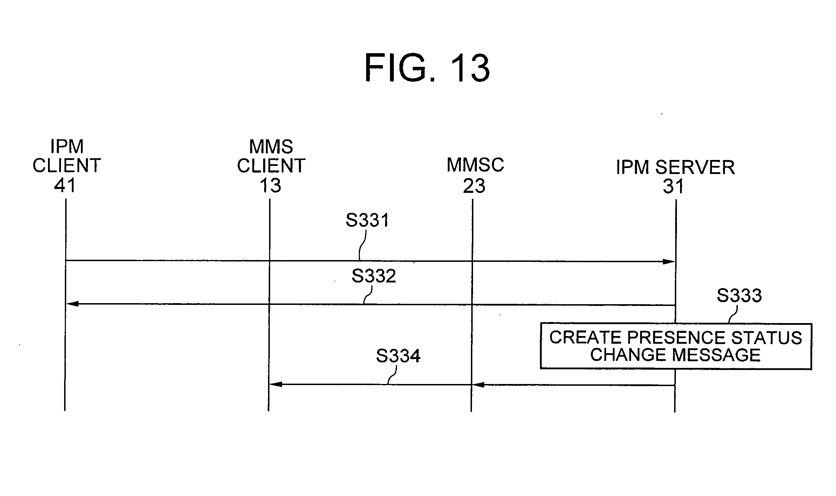

First, an operation from the IPM client 41 updating the presence status information until the MMS client 13 receives the updated content will be described based on the sequence chart of Fig. 13.

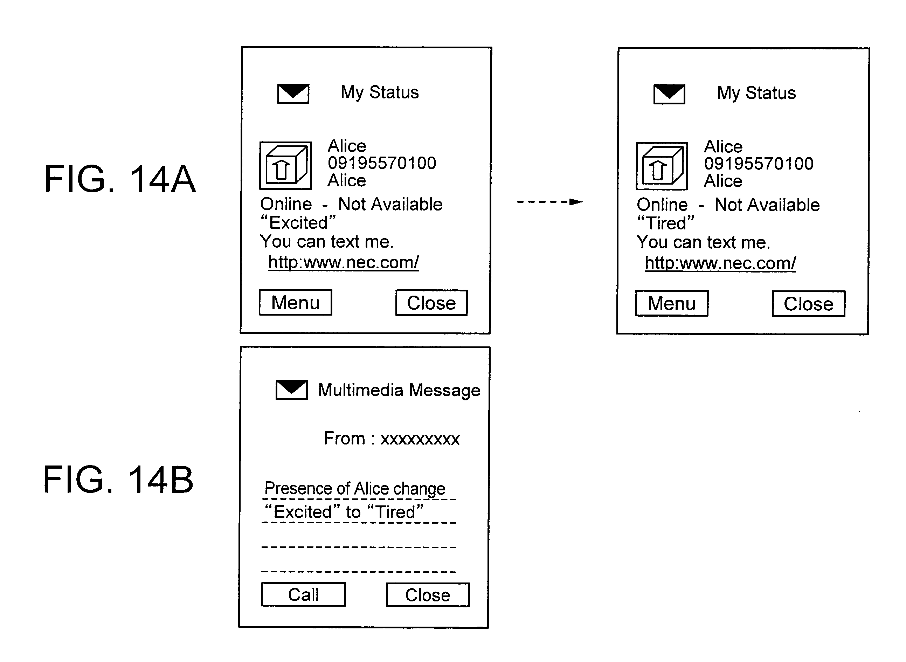

First, the IPM client 41 transmits a change (update) of the presence status as a presence update registration request to the IPM server 31 (step S331). In this exemplary embodiment, as the IPM client 41 changed the presence status information from "Excited" to "Tired" as shown in Fig. 14A, a presence update registration request is transmitted.

Then, the IPM server 31 receives the presence update registration request and registers it in the IPM user database section 32, and sends back an update registration reply indicating completion of update registration of the presence status to the IPM client 41 (step S332). Then, based on the received presence update registration request, the IPM server 31 creates a presence status change message indicating the changed content of the presence status information of the IPM client 41 (step S333), and transmits the presence status change message to the MMS client 13 via the MMSC 23 (step S334).

Thereby, in the IPM client 31 receiving the presence status change message, the changed content of the presence status of the IPM client 41 (user name: Alice) is displayed on the screen as an IP message in MMS format, as shown in Fig. 14B. Thereby, the user of the MMS client 31 can notice the changed content of the presence status of the IPM client 41.

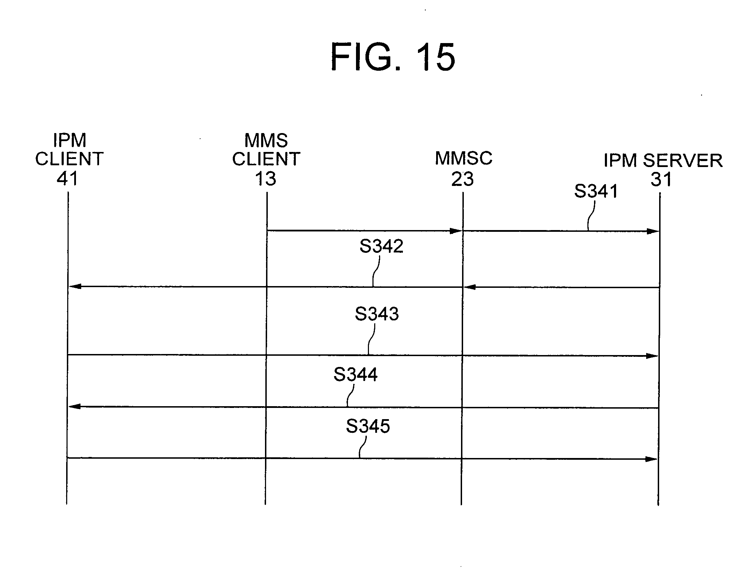

Next, an operation in which the MMS client 13 updates the presence status information and the IPM client 41 receives the updated content will be described based on the sequence chart of Fig. 15.

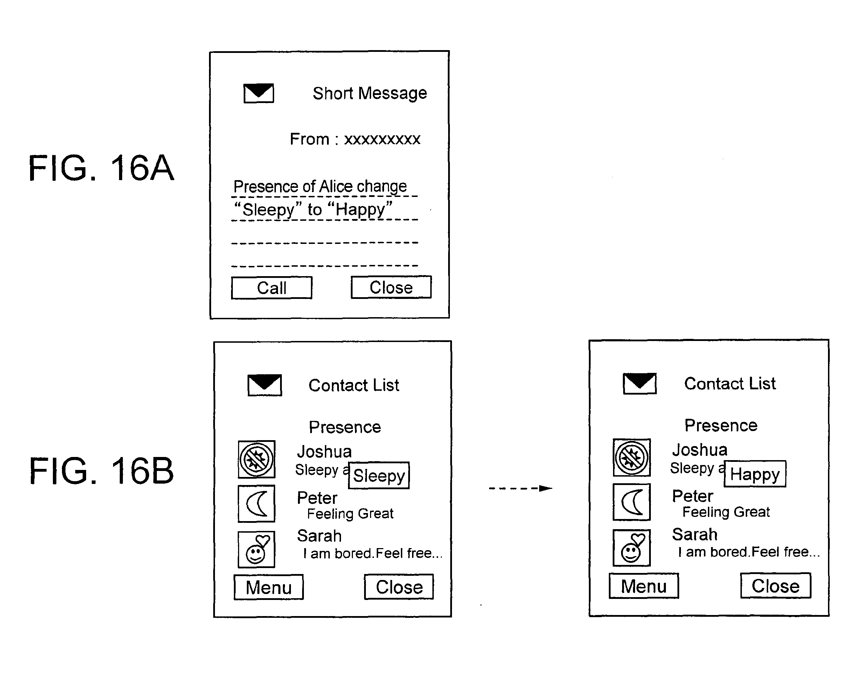

First, the MMS client 13 transmits a change (update) in the presence status as a presence update registration request to the IPM server 31 via the MMSC 23 (step S341). In this exemplary embodiment, a fact that the present status information of the MMS client 13 is changed from "sleepy" to "happy" is notified to the IPM server 31 as an IP message in MMS format as shown in Fig. 16A.

Then, the IPM server 31 receives the presence update registration request and transmits a presence change notification signal (hereinafter referred to as "CIR signal 1 "), notifying that there is a change in the presence status information of the MMS client 13, to the IPM client 41 (step S342). The IPM client 41 receives the CIR signal 1 and transmits a message (hereinafter referred to as "presence update notification request") requesting the updated content of the presence status information of the MMS client 13 to the IPM server 31 (step S343).

In response to the presence update notification request, the IPM server 31 transmits the presence status update information of the MMS client 13 in IMPS format (step S344). Based on the notified presence status update information, the IPM client 41 updates and sets the presence status setting of the MMS client 13 stored in the IPM client 41. In this exemplary embodiment, the presence status setting of the MMS client 13 (user name: Joshua) is changed from "Sleepy" to "Happy" as shown in Fig. 16B.

Then, the IPM client 41 transmits an update completion notification, notifying that the presence status setting stored in the IPM client 41 has been properly updated, to the IPM server 31 (step S345).

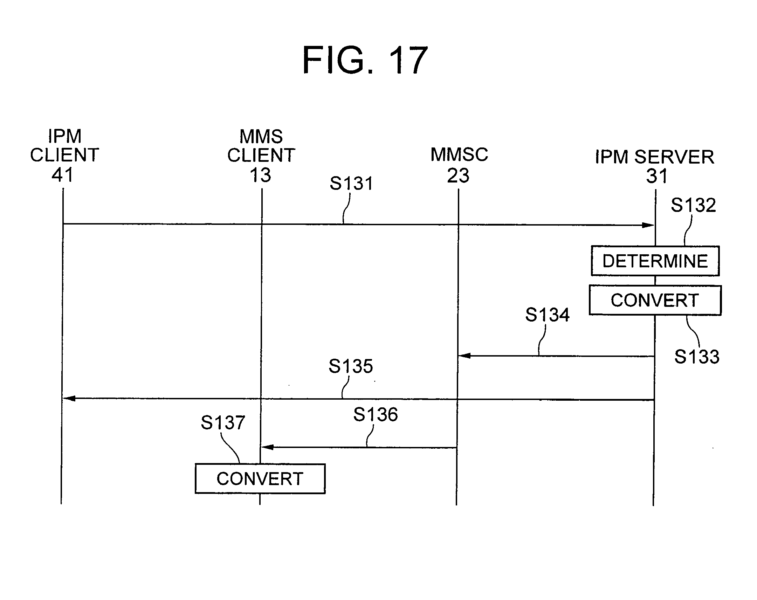

Next, an operation until an IP message created and transmitted by the IPM client 41 is received by the MMS client 13 will be described based on the sequence chart of Fig. 17.

First, the IPM client 41 transmits a created IP message to the MMS client 13 (step S131). As shown in Fig. 11, the IPM client 41 transmits an IP message, input in the message creation screen, when the "send" button is clicked. This IP message is transmitted to the IPM server 31 in IMPS format.

The IPM server 31 receives the message from the IPM client 41 and determines the message type of the destination (transfer destination) terminal of the message (step S132). In this exemplary embodiment, the message type of the received IP message is converted from IMPS format to MMS format (step S133).

Then the IPM server 31 transmits the message converted by the MMSC 23 (step S 134) and transmits a transmission success signal (200) to the IPM client 41 via the MMSC 23 (step S135). Then, the MMSC 23 transmits (transfers) the IP message transmitted from the IPM server 31 to the MMS client 13 (step S136). The MMS client 13 receives the IP message transmitted from the MMSC 23 and displays the IP message (step S137).

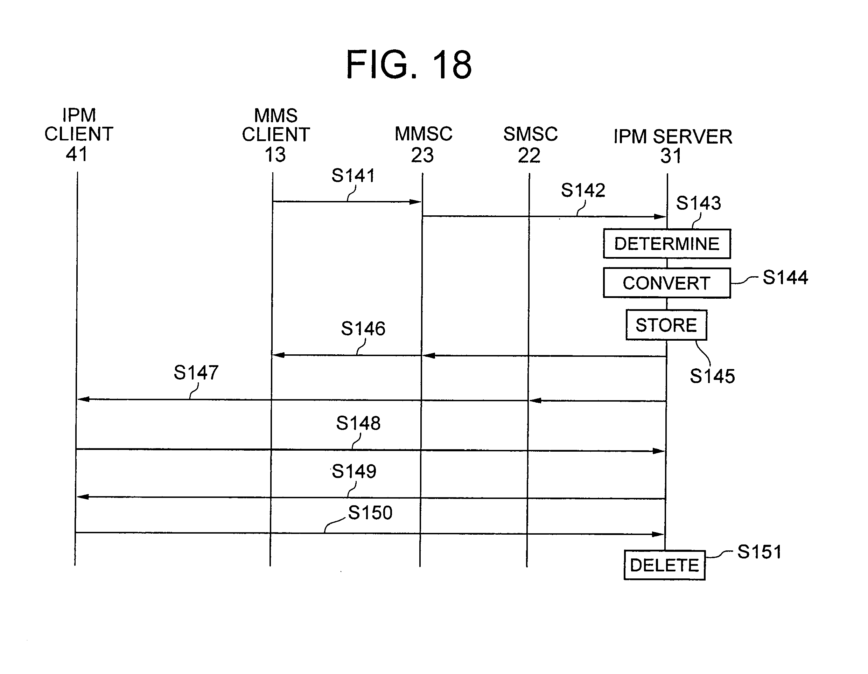

Next, an operation until an IP message created and transmitted by the MMS client 13 is received by the IPM client 41 will be described based on the sequence chart of Fig. 18.

First, the MMS client 13 transmits an IP message created for the IPM client 41 to the MMSC 23 (step S141). Then, the MMSC 23 receives this IP message and transmits it to the IPM server 31 (step S 142).

Then, the IPM server 31 determines the message type of the transfer destination (IPM client 41) of the IP message (step S143) and converts the IP message into IMPS format (step S144). Then, the IPM server 31 stores the IP message in the IPM user database section 32 (step S 145) and transmits a transmission success signal (0x0000000) as a reply signal to the MMS client 13 via the MMSC 23 (step S 146).

Then, the IPM server 31 transmits a message incoming notification signal (hereinafter referred to as "CIR signal 2") to the IPM client 41 via the preset SMSC 22 (step S 147). The IPM server 31 may transmit the CIR signal 2 via the preset MMSC 23.

Then, the IPM client 41 receives the CIR signal 2 and transmits an IP message acquisition request to the IPM server 31 (step S148). The IPM server 31 receives the message acquisition request and sends back a message corresponding to the message acquisition request to the IPM client 41 (step S 149).

Then, the IPM client 41 receives the IP message and transmits an IP message reception reply indicating the successful reception of the IP message to the IPM server 31 (step S 150). Finally, the IPM server 31 which received the message reception reply deletes the message from the IPM user database (step S151).

According to the exemplary embodiment, the IPM client 41 connected to the IPM server 31 can transmit and receive an instant message to and from the SMS client 11 and the MMS client 13 which are existing client terminals, and notify presence information and changed content thereof with each other. Thereby, the users of the respective client terminals can transmit and receive messages without being aware of the message type supported by the communication counterpart.

Further, as registered user information and presence status information are updated in real time, the user of each client terminal can check the status (presence) of the communication counterpart and contact by the optimum measure at the best timing. Further, by taking over the SMS format, it is also possible to utilize the message service in association with the existing SMS users.

Further, instant message communications can be made with a counterpart whose account or e-mail address is unknown, if his/her telephone number is known. Further, messages can be transmitted or received without performing procedures such as authorization or registration before the communications. Furthermore, although SMS and MMS have been exemplarily shown as exiting message services in the exemplary embodiment, association between the instant messenger service (ISP-IM) provided by the ISP carrier and a message service can be performed in the same manner as that of SMS and MMS. Besides, in the exemplary embodiment, services directed by the operator and provided by the IPM server, such as charge settings to the users and advertisement display, can be provided.

While the present invention has been described with reference to the embodiments (and examples), the present invention is not limited to these embodiments (and examples). Various changes in form and details which can be understood by those skilled in the art may be made within the scope of the present invention.

This application is based upon and claims the benefit of priority from Japanese patent application No. 2007-091479, filed on March 30, 2007, the disclosure of which is incorporated herein in its entirety by reference.

### INDUSTRIAL APPLICABILITY

The present invention is applicable to a real-time communication service system in which real-time communications are performed between communication terminals via servers.

### BRIEF DESCRIPTION OF THE DRAWINGS

Fig. 1 is a configuration diagram showing the overall network in a communication system according to an exemplary embodiment of the invention.
Figs. 2A and 2B show the communication system disclosed in Fig. 1, in which Fig. 2A is an illustration showing an exemplary IP message notified to an SMS client, and FIG. 2B is an illustration showing an exemplary IP message notified to an MMS client.
Fig. 3 is a block diagram showing an exemplary configuration of an IPM server in the communication system disclosed in Fig. 1.
Fig. 4 is a flowchart schematically showing processing steps when the IPM server in the communication system disclosed in Fig. 1 receives an IP message.
Figs. 5A and 5B show the communication system disclosed in Fig. 1, in which Fig. 5A is an illustration showing exemplary information notified from the SMS client to the IPM client, and Fig. 5B is an illustration showing exemplary information notified from the MMS client to the IPM client.
Fig. 6 is a communication sequence chart indicating timings of communication operations for presence status information updating performed from the IPM client to the SMS client in the communication system disclosed in Fig. 1.
Figs. 7A and 7B show the communication system disclosed in Fig. 1, in which Fig. 7A is an illustration showing an exemplary updated content of the presence status of the IPM client, and Fig. 7B is an illustration showing an exemplary message content notified to the SMS client.
Fig. 8 is a communication sequence chart indicating timings of communication operations for presence status information updating performed from the SMS client to the IPM client in the communication system disclosed in Fig. 1.
Figs. 9A and 9B show the communication system disclosed in Fig. 1, in which Fig. 9A is an illustration showing an exemplary updated content of the presence status of the SMS client, and Fig. 9B is an illustration showing an exemplary message content notified to the IPM client.
Fig. 10 is a communication sequence chart showing timings of communication operations performed among the IPM client, the SMS client, the SMSC server, and the IPM server in the communication system disclosed in Fig. 1.
Fig. 11 is an illustration showing an exemplary message content created by the IPM client in the communication system disclosed in Fig. 1.
Fig. 12 is a communication sequence chart showing timings of communication operations performed among the IPM client, the SMS client, the SMSC server, and the IPM server in the communication system disclosed in Fig. 1.
Fig. 13 is a communication sequence chart showing timings of communication operations for presence status information updating performed from the IPM client to the MMS client in the communication system disclosed in Fig. 1.
Figs. 14A and 14B show the communication system disclosed in Fig. 1, in which Fig. 14A is an illustration showing an exemplary updated content of the presence status of the IPM client, and Fig. 14B is an illustration showing an exemplary message content notified to the MMS client.
Fig. 1 is a communication sequence chart showing timings of communication operations for presence status information updating performed from the MMS client to the IPM client in the communication system disclosed in Fig. 1.
Figs. 16A and 16B show the communication system disclosed in Fig. 1, in which Fig. 16A is an illustration showing an exemplary updated content of the presence status of the MMS client, and Fig. 16B is an illustration showing an exemplary message content notified to the IPM client.
Fig. 17 is a communication sequence chart showing timings of communication operations performed from the IPM client to the MMS client via the MMSC server and the IPM server in the communication system disclosed in Fig. 1.
Fig. 18 is a communication sequence chart showing timings of communication operations performed from the MMS client to the IPM client via the MMSC server and the IPM server in the communication system disclosed in Fig. 1
Figs. 19A, 19B, and 19C show a related communication system, in which Fig. 19A is a schematic configuration diagram showing the network configuration of an SMS system, and Fig. 19B is a schematic configuration diagram showing the network configuration of an MMS system, and Fig. 19C is a schematic configuration diagram showing the network configuration of an EMS system.

### DESCRIPTION OF REFERENCE NUMERALS

- 11: SMS client
- 13: MMS client
- 15: MES client
- 21: SMS server
- 23: MMS server
- 25: MES server
- 31: IPM server
- 32: IPM user database section
- 33: client interface section
- 34: message conversion relaying section
- 41: IPM client
- 331: IMPS communication unit
- 332: IM communication unit
- 341: IPM communication path control unit
- 342: message type conversion unit

## Claims

1. A communication system for exchanging information using messages of different types, comprising:
a plurality of types of servers, each of the servers providing a service using a different user interface for each message type;
a mobile terminal for connecting to a dedicated server by a user interface for the server; and
relay means for establishing association between the servers, wherein
the relay means determines a source mobile terminal and a destination address, interchanges user interfaces based on a determination result, and transmits a message including information of a communication status transmitted from the source mobile terminal, to an object server of the interchanged user interface.

2. The communication system according to Claim 1, wherein
the mobile terminal is a mobile telephone to which a telephone number is given, and
the relay means determines a source mobile telephone and a destination address to which different services are provided, based on the telephone number of the mobile telephone which has been registered beforehand.

3. The communication system according to Claim 2, wherein the relay means functions as a server which provides, to the source mobile telephone which performs an access using a telephone number as the destination address, a service using a message by a user interface corresponding to the telephone number.

4. The communication system according to Claim 2, wherein the relay means determines a user interface to be interchanged based on the telephone number of the destination mobile telephone.

5. The communication system according to Claim 2, wherein the relay means determines a destination server based on a size of the message to the destination address determined based on the telephone number.

6. The communication system according to Claim 1, wherein
one of the servers transmits the message transmitted from the relay means, to the mobile terminal, and
another one of the servers notifies the mobile terminal of an incoming call of the message, and replies to a message acquisition request from the mobile terminal receiving the notification.

7. The communication system according to Claim 1, wherein when the information of the communication status is input, the relay means sequentially transmits the message, in which the information of the communication status in included, to a mobile terminal of the destination address.

8. The communication system according to Claim 3, wherein the relay means incorporates additional information in the information of the communication status.

9. The communication system according to Claim 1, wherein the mobile terminal includes a message list for classifying for each communication target, in addition to a transmission and reception box for classifying and storing the message.

10. The communication system according to Claim 1, wherein the mobile terminal stores the message transmitted from the server in a dialogue form.

11. A relay device for relaying, between a plurality of types of servers, an exchange of information using a message between mobile terminals of different user interfaces, the device comprising:
relay means for determining a source mobile terminal and a destination address, interchanging user interfaces based on a determination result, and transmitting a message including a communication status, transmitted from the source mobile terminal, to an object server of the interchanged user interface.

12. The relay device according to Claim 11, wherein
the mobile terminal is a mobile telephone to which a telephone number is given, and
the relay means determines a source mobile telephone and a destination address to which different services are provided, based on the telephone number of the mobile telephone which has been registered beforehand.

13. The relay device according to Claim 12, wherein the relay means functions as a server which provides, to the source mobile telephone which performs an access using a telephone number as the destination address, a service using a message by a user interface corresponding to the telephone number.

14. The relay device according to Claim 12, wherein the relay means determines a user interface to be interchanged based on the telephone number of the destination mobile telephone.

15. The relay device according to Claim 12, wherein the relay means determines a destination server, based on a size of the message to the destination address determined based on the telephone number.

16. The relay device according to Claim 11, wherein when the information of the communication status is input, the relay means sequentially transmits the message, in which the information of the communication status is included, to a mobile terminal of the destination address.

17. The relay device according to Claim 13, wherein the relay means incorporates additional information in the information of the communication status.

18. A communication relay method for relaying, between a plurality of types of servers, an exchange of information using a message between mobile terminals of different user interfaces, comprising:
determining a source mobile terminal and a destination address, interchanging the user interfaces based on a determination result, and transmitting a message, including a communication status transmitted from the source mobile terminal, to an object server of an interchanged user interface.

19. A relay program for relaying and controlling, between a plurality of type of servers, an exchange of information using a message between mobile terminals of different user interfaces, the program causing a computer to execute:
a function of determining a source mobile terminal and a destination address;
a function of interchanging the user interfaces based on a determination result; and
a function of transmitting a message, including a communication status transmitted from the source mobile terminal, to an object server of an interchanged user interface.
